# EUROPEAN PATENT APPLICATION

(11) **EP 1 440 921 A1**
(43) Date of publication of application: **28.07.2004**
(21) Application number: 03075151.5
(22) Date of filing: 15.01.2003
(51) Int. Cl.: B65G 17/06

(54) **A conveyor, as well as conveyor belt**

(71) Applicant: Medanva B.V., 3743 JM Baarn (NL)
(72) Inventor: Balk, Wouter, 3743 JM Baarn (NL)
(74) Representative: Metman, Karel Johannes

(57) **Abstract**

A conveyor for transporting parcel goods and the like over a track comprises a frame (1) and an endless conveyor belt (8) comprising a transport portion and a return portion, which is supported by the frame and which is driven by driving means. The conveyor belt is provided with a number of elongated (in transverse direction), substantially rigid supporting elements (9), which are directly or indirectly interconnected and which can pivot relative to each other at least about an axis parallel to the plane of transport and perpendicularly to the direction of transport. Movable cover flaps (11) projecting from said supporting elements in the longitudinal direction of the conveyor are formed on at least a number of supporting elements, wherein the length dimension of said flaps is such that they are capable of covering at least one gap (10) to an adjacent supporting element.

## Description

The invention relates to a conveyor for transporting parcel goods and the like over a track according to the preamble of claim 1.

Belt conveyors are known in practice in various embodiments thereof. They are used for the horizontal or vertical transport of goods or as buffers in a production process. When they are used for transporting certain types of goods, problems may arise due to the presence of gaps between the rigid supporting elements, either constantly or temporarily when moving through a horizontal or vertical bend. When small goods or goods having projecting parts are transported, said goods may fall through said gaps or get wedged therein. Opening or closing gaps may furthermore constitute a safety problem, because a person's fingers may get wedged between the supporting elements.

An embodiment of a belt conveyor according to the preamble of claim 1 is known from WO 99/57044 A1. This prior art conveyor comprises slats provided with flexible flaps.

The object of the invention is to further improve the conveyor of the type referred to in the introduction.

In order to accomplish that objective, the conveyor according to the invention is characterized by the features of the characterizing portion of claim 1.

These features according to the invention provide a closed transport surface, which prevents goods or projecting parts thereof finding their way into the gaps between the supporting elements. Because the cover flaps are held in contact with an adjacent supporting element, there will be no problems with projecting cover flaps when the belt passes from the transport portion to the return portion, which problems might interfere with the correct transfer or receipt of goods to or from other conveyors.

The invention furthermore relates to a conveyor belt for use in a conveyor and to supporting elements for forming a conveyor belt.

The invention will be explained in more detail hereafter with reference to the drawing, which shows an embodiment of the conveyor according to the invention.

Fig. 1 is a side view of a conveyor according to the invention.

Fig. 2 is a plan view of a part of the conveyor belt of the conveyor of Fig. 1, wherein the cover flaps are not shown, however.

Fig. 3 shows two supporting elements arranged adjacently to each other, with flaps provided thereon.

Fig. 4 is a sectional view along line IV-IV in Fig. 3.

Figs. 5-10 are schematic side views of various further embodiments of a flap of the conveyor according to the invention, said flaps comprising flexibly connected rigid parts.

Figs. 11-14 are longitudinal sectional views showing two supporting elements and flaps and illustrating different ways of connecting the supporting elements and flaps to the connecting roller chain.

Fig. 15 is a plan view of the supporting elements and slats of fig. 16.

Figs. 16-20 are longitudinal sectional views showing a number of supporting elements and flaps at the position of an end pulley and illustrating various means to keep the flaps in contact with an adjacent supporting element.

Fig. 21 schematically shows a further embodiment of a conveyor belt including supporting elements and flaps.

Fig. 22 is a schematic side view of a part of a conveyor belt of a further embodiment of the invention.

Fig. 23 Fig. 22 is a schematic side view of a part of a conveyor belt of a further embodiment of the invention.

Fig. 24 - 27 are a plan view and enlarged sectional views along the lines XXV-XXV, XXVI-XXVI and XXVII-XXVII in Fig. 24, respectively.

The drawing shows one of the possible embodiments of the conveyor according to the invention, which in this case is intended for vertical transport along a helical path of products, in particular difficult parcel goods having projecting parts, such as bundles of newspapers, bundles of laundry and individual articles of laundry and also individual small products. In practice, such conveyors are also known as spiral conveyors or winding conveyors. Said conveyors are capable of transporting products in a continuous flow.

The conveyor as shown is provided with a frame 1, which, in this embodiment, comprises a central column 2 with bases 3 and a helical guide chute 4, which extends round column 2 and which is attached thereto. Also all kinds of other frame constructions are conceivable, of course. An end pulley 5, 6 is provided at the upper and the lower end of guide chute 4, and a return chute 7 of frame 1 extends between said ends of helical guide chute 4. In this embodiment, the conveyor belt 8 supported by frame 1 is guided along different paths in the transport portion and in the return portion, therefore. Embodiments wherein the transport portion is returned along the underside of guide chute 4 are also possible, however. The conveyor belt 8 can be driven via one end pulley 5, 6 or via both, or otherwise. The conveyor can be connected to further conveyors near the upper and the lower end pulley 5, 6.

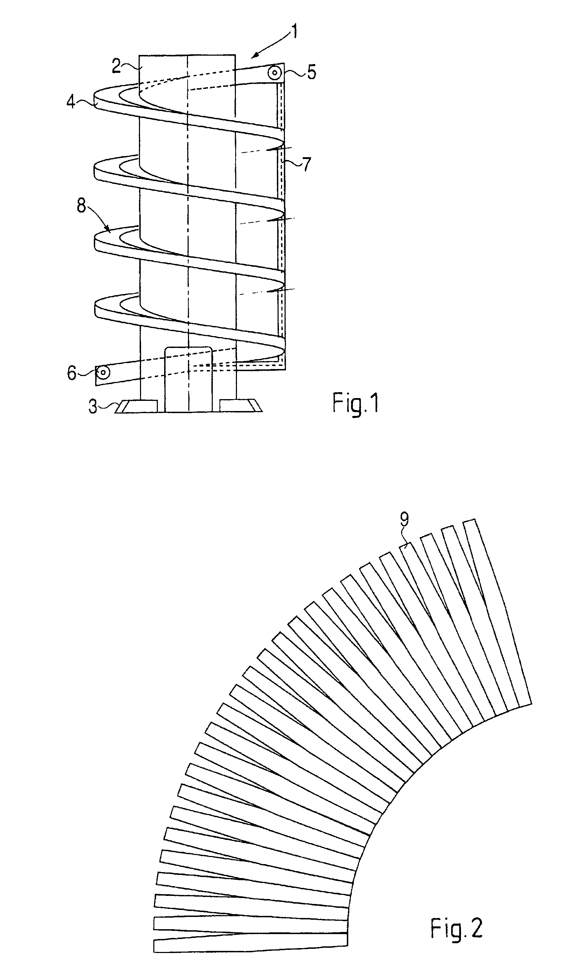

As is also shown in particular in Fig. 2, conveyor belt 8 comprises a large number of slats which are interconnected, either directly or via an endless, elongated, flexible connecting element, such as a chain, a cable or the like. Each slat 9 has an upper, flat supporting surface, and the slats are arranged adjacently to each other in the transport portion, leaving open a gap between them, so that products can be supported by a number of adjoining slats 9. Slats 9 are pivotally interconnected in such a manner that they are capable of pivoting movement about a first axis parallel to the plane of transport and perpendicularly to the direction of transport as well as about a second axis perpendicularly to the plane of transport and perpendicularly to the direction of transport. The latter pivoting movement enables the conveyor belt to move in a spiral path, whilst the former pivoting movement allows the conveyor belt to bend round end pulleys 5 and 6. Conveyor belt 8 could also be bent into the other direction rather than over the end pulleys, that is, in upward direction, albeit only with a relatively large radius of curvature.

Since the slats 9 taper slightly from their axes near their ends, said slats 9 do not interfere with each other in bends. This shape of the slats 9, however, leads to the formation of gaps between the adjacent slats 9, whilst said gaps are further enlarged at the location of the end pulleys since the slats 9 pivot about axes which are positioned some distance below the upper surface of the slats 9. The present invention now provides means which cover said gaps 10 between slats 9 under all circumstances, so that a closed transport surface is provided at all times.

A flap structure for the conveyor belt in the conveyor according to the invention comprises a plurality of rigid parts which are pivotally connected to each other in a manner so that they pivot about a pivot axis which is substantially parallel to the axis of the respective slats, i.e. extending parallel to the plane of transport and perpendicularly to the direction of transport. With respect to these embodiments it is noted that one of the rigid parts may act as a slat or other supporting element.

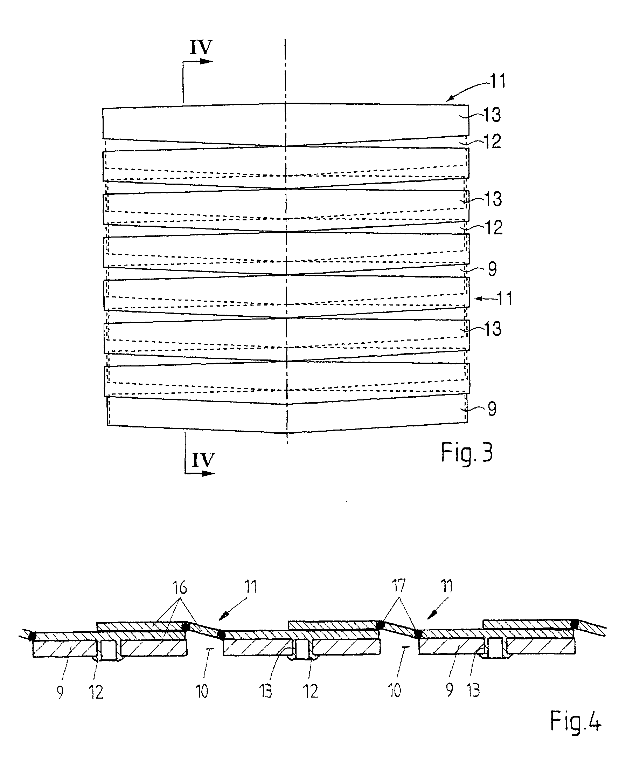

Figs. 3 and 4 show said means, which consist of cover flaps 11. In this embodiment, each slat 9 has an associated cover flap 11 attached thereto, which projects over the adjacent slat 9 on one side. Preferably, each cover flap 11 extends rearwards, seen in the direction of transport of the conveyor. In the case of a two-way spiral conveyor, the cover flap preferably extends downwards. The downward force assists to keep the cover flaps 11 taut. Each cover flap 11 may be attached to the associated slat 9 in any suitable manner, for example by gluing, screwing, clamping, welding, stapling and the like. It may be convenient to attach the flaps 11 to the slats 9 in a removable manner in order to facilitate replacement of the flaps 11.

As is shown in Fig. 4, the illustrated embodiment of cover flap 11 comprises three rigid parts 16 connected by a flexible element 17, in this case a flexible material co-extruded together with the rigid parts 16. The co-extruded part is formed to such an extent that the flap has a preconfigured shape in which the flap 11 is curved downwardly. This means that in the mounted position in which the flap is substantially straight or even bent slightly upwardly, the flap is tensioned and the free end thereof is held in contact with the adjacent slat. When the conveyor belt is bent around an end pulley 6, the free end of the flaps 11 is still held in contact with the adjacent slat. The preconfigured shape of the flaps 11 and the flexural resistance of the flexible elements 17 therefore form a contact means.

In other words, said contact means may comprise elastic means in the conveyor belt biasing the flaps in a direction to said adjacent supporting element. The elastic contact means may be integrated in the pivotal connection between the rigid parts of the flaps. The pivotal connection between the rigid parts of the flaps can be made of elastic material having such a shape that in relaxed state the flaps are curved downwardly from the supporting element.

In the embodiment shown, the flap 11 is provided in one of the rigid parts 16 with a connection means in order to removably connect the flap 11 to the corresponding slat 9, such that this rigid part 16 overlaps the slat 9 to a large extent. The connection means includes hooked ribs 12 engaging in corresponding holes 13 in the slat 9. A plurality of connection means 12, 13 may be distributed along the length of the slat. Other embodiments of removable or fixed connection means are conceivable.

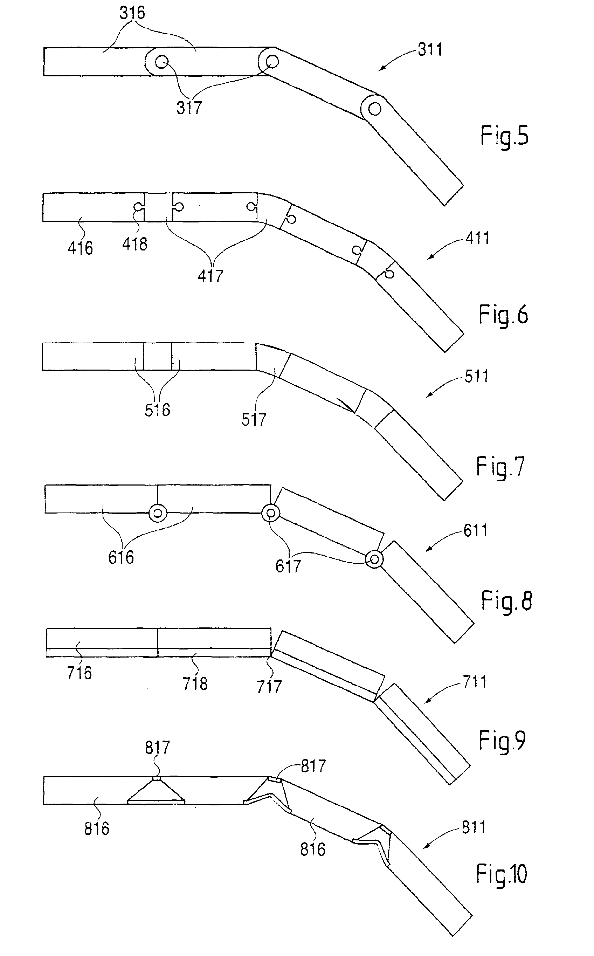

Figs. 5 - 10 very schematically show variations of the flaps according to the invention.

Fig. 5 shows a flap 311 comprising four rigid parts 316 which are connected to each other by pin-hole connections 317 which allow a pivoting movement of the adjacent rigid parts 316.

Fig. 6 shows a flap 411 comprising four rigid parts 416 interconnected by flexible elements 417 which are locked to the adjacent rigid parts 416 through fixing means 418.

Fig. 7 shows a further variant of fig. 6, wherein a flap 511 comprises rigid parts 516 interconnected by flexible elements 517 which rigid parts and flexible pivoting elements are made by co-extrusion in one extruding step. In this manner, no separate assembly nor fixing means between the rigid parts of the flap are necessary.

Figs. 8, 9 and 10 are embodiments in which only a pivoting movement of adjacent rigid parts is possible in downward direction to allow the flaps to follow the conveyor belt upon the passage over an end pulley, but which flaps behave rigid when they are loaded from above in the transport part of the conveyor.

Fig. 8 is a first embodiment showing a flap 611 including a plurality of rigid parts 616 which abut when they are aligned with each other. Said rigid parts are interconnected on their lower sides through a mechanical pivot allowing the downward pivoting movement.

Fig. 9 shows an alternative embodiment of a flap 711 including a plurality of rigid parts 716 which are interconnected by a layer 718 of flexible material which is attached to the lower side of the rigid parts 716, such that this flexible layer forms flexible connections 717. The rigid parts 716 and layer 718 of flexible material may be made by co-extrusion or as separate parts.

Fig. 10 shows a flap 811 including a plurality of rigid parts 816. The shape of the rigid parts 816 is such that they substantially abut at their upper side and are spaced from each other on their lower side so that adjacent rigid parts may pivot relatively about their abutting upper sides through flexible parts 817. On their lower sides, the adjacent rigid parts 816 are connected by a stop member which is flexible and is taut when two adjacent rigid parts 816 are aligned, thereby allowing only a downward pivoting movement.

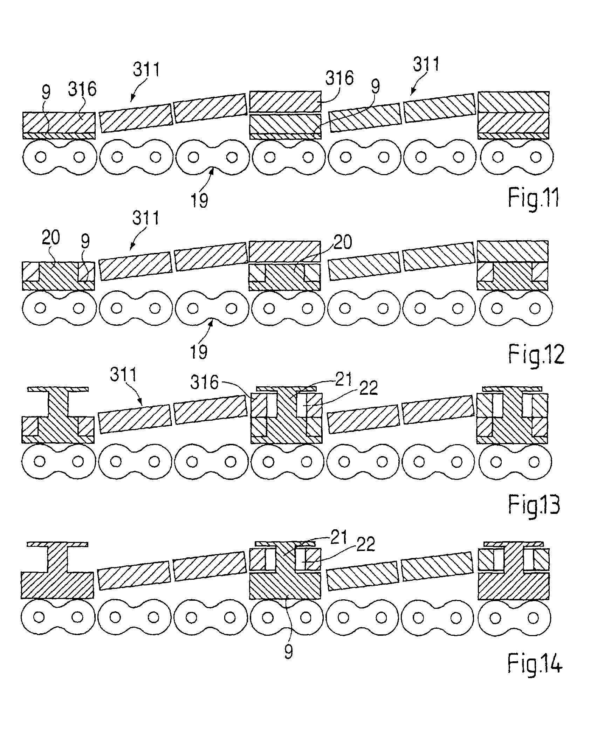

Figs. 11 - 14 illustrate various ways of connecting slats and flaps to a roller chain 19. An example of a conventional connection between such roller chain 19 and slats is illustrated in European patent application 1 009 692, the contents of which are incorporated herein. The slats 9 have a respective flap connected thereto, said flap may for example be constructed as one of the flaps of the embodiments of figs. 5-9. In Fig. 11, one of the rigid parts 16 of the flaps is attached on top of the slat 9 or a connecting part of the chain 19, whereas the rigid part 316 at the free end of such flap 311 rests on top of the adjacent slat 9 or better rigid part of the adjacent flap 311. In the embodiment of fig. 11, each slat is connected in a fixed manner at one point to a link of the roller chain 19.

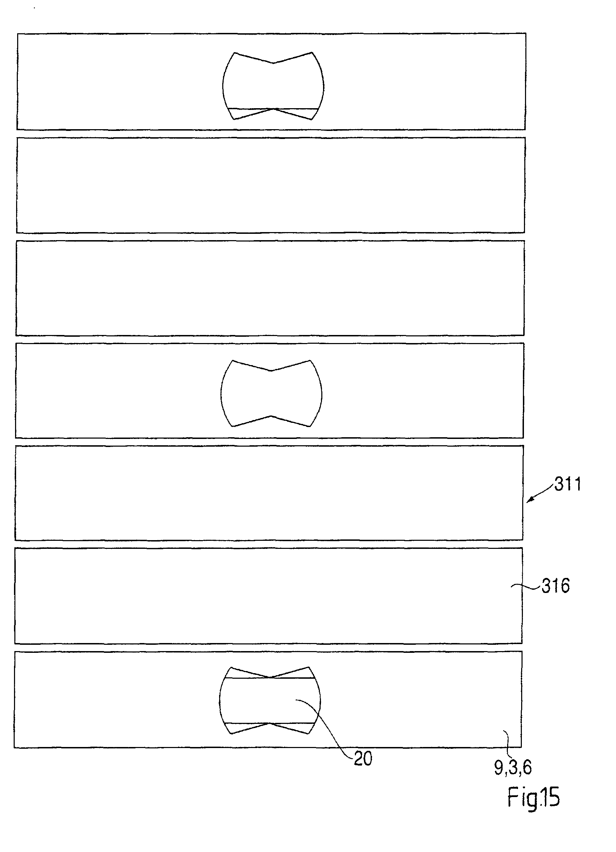

In the embodiment of fig. 12, there is a flexible connection between each slat 9 and a link of the chain 19, said flexible connection comprising a (non-circular, see Fig. 11) shaft 20 extending perpendicularly to the plane of the conveyor belt. The free end of each flap 311 is still resting freely on the adjacent slat 9.

In the embodiment of Fig. 13, the shaft 20 also includes a contact element 21 on each shaft 20, said contact element extending through a slotted hole 22 in the rigid part 316 at the free end of the flap 311 and is shaped so as to hold the flap 311 in contact with the adjacent slat of the conveyor belt, but to allow for a sliding movement to compensate for length variations in the conveyor belt when this is circulated around an end pulley. Such separate contact element may be useful if the flap itself is not provided with contact means, for example in the form of a pretension in the flaps.

Fig. 14 shows a further embodiment in which the contact element 21 is formed directly on the slat or rigid element acting as a slat.

Fig. 15 is a plan view of the embodiment of fig. 12 showing the flexible connector 20 to allow a rotation around an axis perpendicularly to the plane of transport.

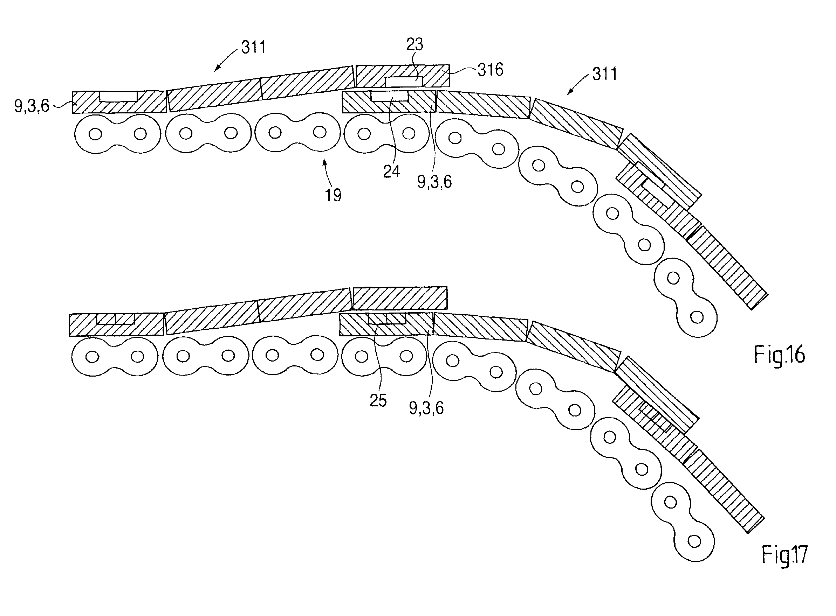

Figs. 16-20 illustrate further contact means which are intended to keep the free ends of the respective flaps 311-811 in contact with the adjacent slat or adjacent flap on which it rests.

In fig. 16, the contact means comprises magnetic elements, for example a magnetic element 23 in the rigid part 316 and a counter magnetic element 23 in the adjacent slat 9 or rigid part 316 of the adjacent flap 311. The magnetic forces are such that they allow a sliding movement between the parts that are kept in contact with each other.

Fig. 17 shows a further contact means 25, for example consisting of small channels in which an underpressure is created when the respective slat or rigid part 9, 316 is at a position of the respective end pulley (now shown).

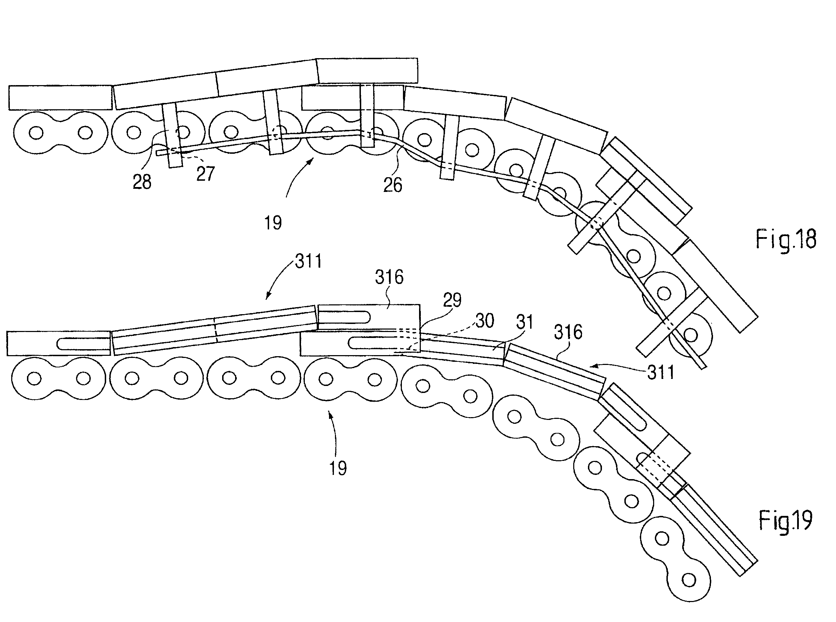

In fig. 18 the contact means comprises a flexible thread or wire 26 which is threaded through openings 27 in projections 28 which are attached to the lateral ends of the rigid parts 316 of the flaps 311.

Fig. 19 shows another embodiment in which the rigid part 316 at the free end of each flap 311 has hooks on the lateral ends thereof with a pin 30 engaging in longitudinal slots 31 in the rigid parts 316 of the adjacent flap 311.

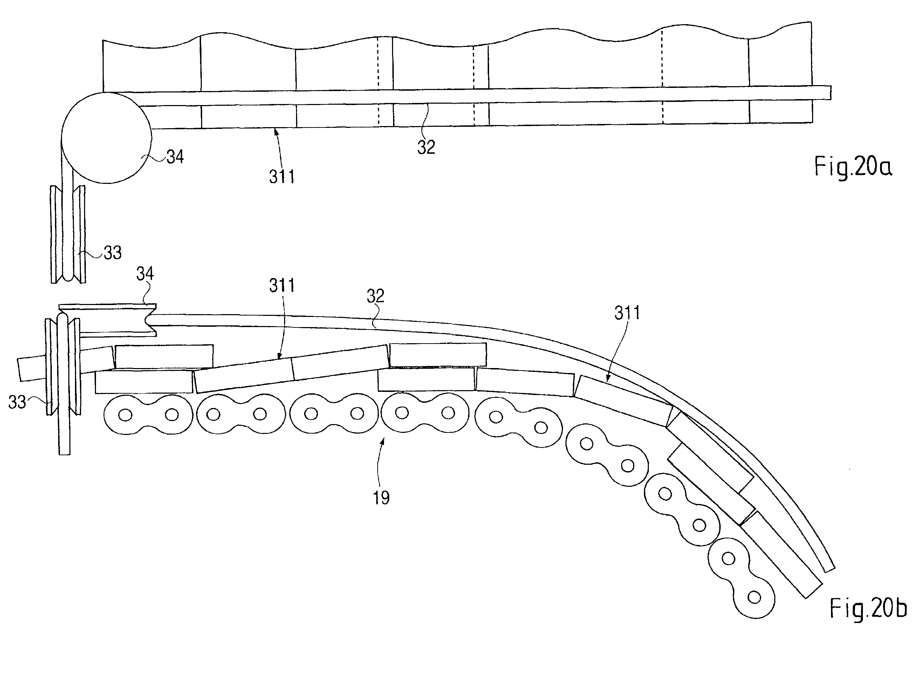

Fig. 20 shows a different solution including local contact means in the form of an endless tying element 32, such as a cord, rope or belt, which is guided around pulleys 33 and 34 in order to guide the tying element against the flaps 311 near the side edge thereof. The tying element 32 follows a path where the conveyor belt is in contact with an end pulley (not shown), i.e. where the conveyor belt is curved and where the flaps need to be held down.

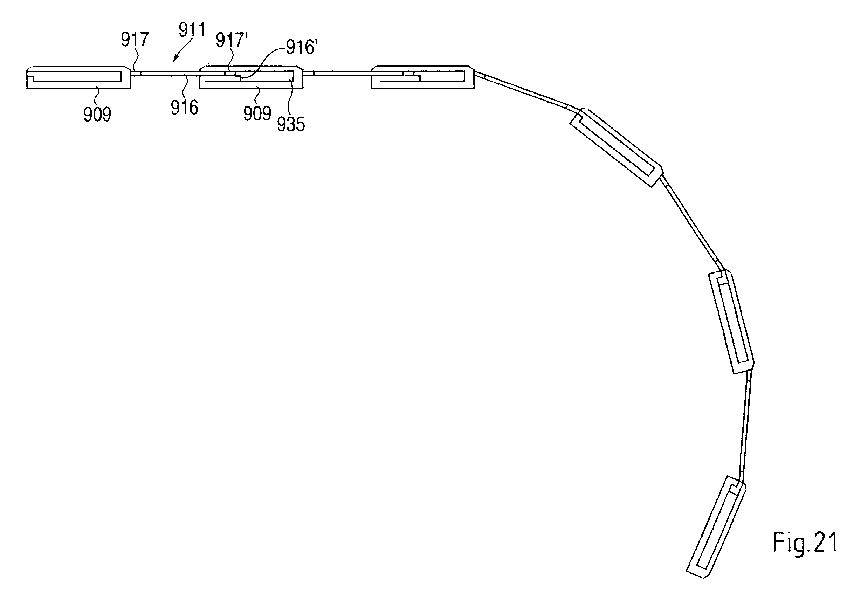

Fig. 21 shows another embodiment of a conveyor belt comprising slats 909 and flaps 911. These flaps 911 consist of a first rigid part 916 and a second hook-like rigid part 916'. The rigid part 916 is connected to the slat 909 through a flexible pivot 917 and both rigid parts 916 and 916' are connected through a flexible pivot 917'. The flap of one slat 909 engages in a cavity 935 of the adjacent slat 909 such that the flap may slide in this cavity 935, but prevents the hooked rigid part 916' from leaving the cavity 935.

In this arrangement, when the slats 909 are in a transport part as shown on the left side in Fig. 21, the flap 911 behaves rigid because only rigid part 916 protrudes from the cavity 935. During passage over an end pulley, the adjacent slats 909 move apart such that only the hooked rigid part 916' is within the cavity 935 so that the flexible pivots 917 and 917' may act as pivots and allow pivoting movement of the rigid part 916 with respect to the adjacent slats 909.

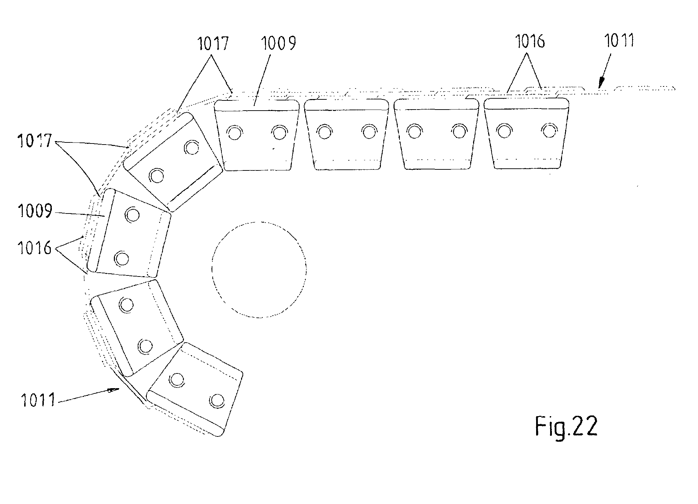

A further embodiment of the invention is shown in Fig. 22. The rigid parts 1016 of the flaps 1011 are connected to each other in a step-like manner due to the flexible connections 1017 which extend slightly inclined or at least in vertical direction. This feature has the advantage that the flaps 1011 easily overlap the adjacent slat 1009 and connected flap 1011, without having to overcome the difference in height. The flexible connections 1017 of each flap 1011 are formed such so as to bias the rigid parts 1016 towards and against the surface of the adjacent flap 1011, so as to form the contact means.

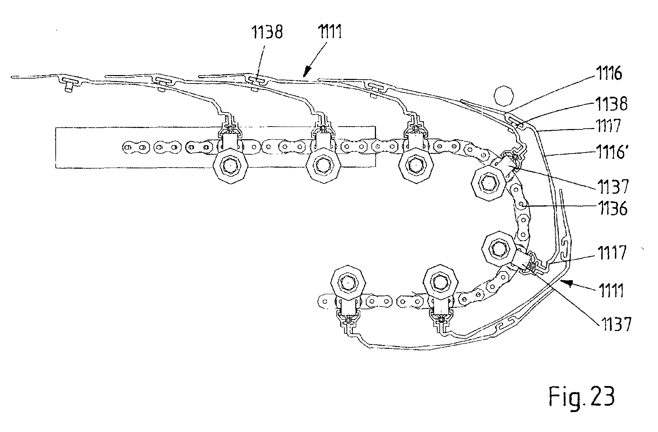

Fig. 23 shows a further embodiment in which one (1116') of the rigid parts 1116 in the flaps 1111 acts as the slat or support element. Rigid part 1116' of each flap 1111 is connected to the driving chain 1136 through a connector 1131. A flexible connection 1117 of the flap 1111 is provided between the connector 1137 and the first rigid part 1116' and between the rigid parts 1116 and 1116'. The contact means comprises connecting elements fixing the flap in a direction perpendicular to the plane of transport and allowing a sliding movement in the direction of transport. The connecting elements include a finger 1138 provided on the lower side of the end rigid part 1116 and engaging in an elongated slot or engaging around the side of the first rigid part 1116' of the adjacent flap 1111.

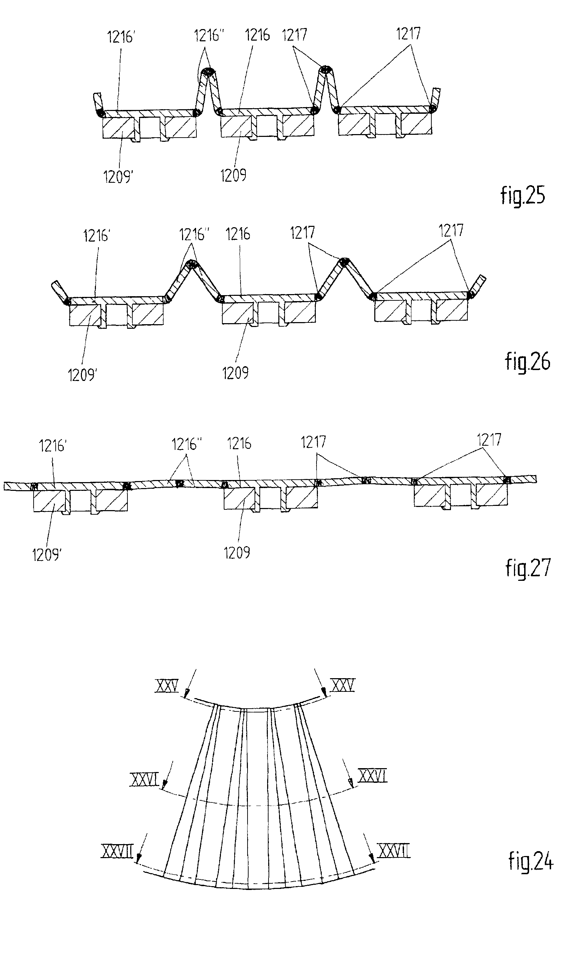

A last embodiment of the invention is illustrated in Fig. 24 wherein the flap runs continuously over at least a part of the conveyor belt. In this embodiment, each slat 1209 has a rigid part 1216 fixed to it and the following adjacent rigid parts 1216" are freely pivotable through flexible connections 1217 and are connected to a following rigid part 1216' which is fixed to the next slat 1209'. This continuous for at least a number of slats. As the spacing between the adjacent slats vary along the length thereof at the position of a curve in the conveyor belt, the freely pivotable rigid parts will take this up by pivoting upwardly locally. The various sections through the curved conveyor belt illustrate the extent of the rigid parts along the length of the slats. The ridges which are created do not disturb the operation of the conveyor.

From the foregoing it will be apparent that the invention provides a conveyor and a conveyor belt which is remarkable for providing a closed transport surface under all circumstances whilst retaining the advantages of separate rigid supporting elements. The closed transport surface ensures a trouble-free and safe operation of the conveyor.

The invention is not restricted to the above-described embodiment as shown in the drawing, which can be varied in several ways without departing from the scope of the invention. Thus, it would for example be possible to attach one cover flap to respectively two members, which cover flap in that case will extend from a supporting element over the adjacent supporting element on either side, or which projects over two supporting elements on one side. Also other combinations are conceivable. The cover flaps may have a constant thickness over their entire surface area and be positioned in overlapping relationship. The width of the flaps may vary in longitudinal direction, such that the flaps are tapered in inward direction of the conveyor. This is particularly favorable in helical conveyors where the conveyor belt is curved with a constant curvature. This may be the case in particular in those cases where no anti-slip profile is used. The invention is furthermore suitable for use in other conveyors, such as straight conveyors, circular conveyors, conveyors comprising left-hand and right-hand bends and combinations of conveyor forms. The present invention can also be used in feeding and discharging conveyors comprising an upward or a downward change of level.

## Claims

1. A conveyor for transporting parcel goods and the like over a track, which conveyor comprises a frame, an endless conveyor belt comprising a transport portion and a return portion, and being supported by said frame and driven by driving means, said conveyor belt being provided with a number of transversely elongated, substantially rigid supporting elements, which are directly or indirectly interconnected and which can pivot relative to each other at least about an axis parallel to the plane of transport and perpendicularly to the direction of transport, wherein movable cover flaps projecting from said supporting elements in the longitudinal direction of the conveyor are formed on at least a number of supporting elements, each of said flaps project on at least one side of the supporting elements to extend over the adjacent supporting element, said flaps comprising rigid parts which are pivotally connected to each other through a pivot axis which is substantially parallel to said axis of the supporting elements, **characterized in that** said conveyor includes contact means to keep each of said flaps in contact with said adjacent supporting element.

2. The conveyor according to claim 1, wherein the conveyor belt comprises said contact means.

3. The conveyor according to claim 2, wherein said contact means are elastic means in the conveyor belt biasing the flaps in a direction to said adjacent supporting element.

4. The conveyor according to claim 3, wherein the elastic contact means are integrated in the pivotal connection between the rigid parts of the flaps.

5. The conveyor according to claim 3, wherein the pivotal connection between the rigid parts of the flaps is made of elastic material having such a shape that in relaxed state the flaps are curved downwardly from the supporting element.

6. The conveyor according to claim 4 or 5, wherein the rigid parts and the flexible parts of said flaps are made by co-extrusion in one or more extruding steps.

7. The conveyor according to one of the preceding claims, wherein said cover flaps are separate parts which are attached to said supporting elements, and wherein preferably the cover flaps are attached to all supporting elements, which cover flaps project on one side of the supporting elements to extend over the adjacent supporting element.

8. The conveyor according to one of claims 1 - 6, wherein one of the rigid parts of each of said flaps acts as supporting element.

9. The conveyor according to one of claims 1 - 7, wherein said supporting elements are made up of slats which are interconnected by a roller chain or similar elongated, endless, flexible connecting element.

10. The conveyor according to one of the preceding claims, wherein the pivot axes are constructed such that they only allow a pivoting action of two adjacent rigid parts in downward direction starting from a position in which the rigid parts are substantially aligned with each other.

11. The conveyor according to claim 10, wherein the flaps comprises a plurality of rigid parts which are abutting each other when aligned, and a continuous layer of flexible material attached to the lower side of said rigid parts, said flexible layer acting as pivot axes at positions between adjacent rigid parts, or wherein each rigid part is formed such that at their edges facing each other they abut on their upper side and are spaced from each other on their lower sides, and wherein each pivot axis is formed by a flexible part connecting the abutting upper sides of adjacent rigid parts and further includes a stop member comprising a flexible strip connecting the lower sides of adjacent rigid parts and being taut when the rigid parts are substantially aligned, or wherein the adjacent rigid parts of a flap are connected to each other in a step-like manner.

12. The conveyor according to claim 1, wherein each flap comprises a first rigid part flexibly connected to the respective supporting element, and a second rigid part pivotally connected to the first rigid part remote from the respective supporting element, the adjacent supporting element being adapted to slidably accommodate the second rigid part and a portion of the first rigid part, such that when the supporting element is positioned on an end pulley, only the second rigid part is accommodated in the adjacent supporting element, and when the supporting element is positioned in the transport part both said portion of the first rigid part and the second rigid part is accommodated in the adjacent supporting element in a non-pivotable manner, or wherein the contact means allow a sliding movement of each of said flaps with respect to the adjacent supporting element or flap, wherein preferably said contact means includes magnetic elements, wherein each flap is provided with a magnetic element near its end remote from the supporting element to which it is attached, and wherein the adjacent supporting element is provided with a co-acting magnetic element, or the contact means including connecting elements, the flap and the adjacent supporting element being provided with said connecting elements fixing the flap in a direction perpendicular to the plane of transport and allowing a sliding movement in the direction of transport, or wherein the contact means includes an endless tying element arranged near each end pulley of the conveyor and being guided around guide pulleys and over at least a side edge of the conveyor belt along a path where the conveyor belt is in contact with the end pulley, or wherein the contact means includes at least an elongated flexible tying element extending over the supporting elements and flaps and exerting a downward force on each of said flaps in a direction to the adjacent supporting element.

13. The conveyor according to claim 1 or 2, wherein the contact means include fixing means fixing some of a plurality of rigid parts of a flap to adjacent supporting elements, such that at least two rigid elements pivotally extend between adjacent supporting elements.

14. A supporting element for use in a conveyor belt for the conveyor according to any one of the preceding claims, which supporting element comprises a substantially rigid, elongated body, wherein a movable cover flap extending in the transverse direction of the supporting element is mounted on the body of said supporting element, said flap comprising rigid parts which are pivotally connected to each other through a pivot axis which is substantially parallel to the longitudinal direction of the supporting element, said supporting element including contact means to keep said flap in contact with an adjacent supporting element, when mounted in a conveyor belt.
